# EUROPEAN PATENT APPLICATION

(11) **EP 2 642 825 A1**
(43) Date of publication of application: **25.09.2013**
(21) Application number: 12173808.2
(22) Date of filing: 27.06.2012
(51) Int. Cl.: H05B 33/08

(54) **Lighting circuit and luminaire**

(30) Priority: 23.03.2012 JP 2012068466
(71) Applicant: Toshiba Lighting & Technology Corporation, Yokosuka-shi Kanagawa 237-8510 (JP)
(72) Inventor: Nakajima, Hiromichi, Kanagawa, 237-8510 (JP); Tsuji, Toshio, Kanagawa, 237-8510 (JP); Kamata, Masahiko, Kanagawa, 237-8510 (JP); Otake, Hirokazu, Kanagawa, 237-8510 (JP); Saito, Yosuke, Kanagawa, 237-8510 (JP)
(74) Representative: Bokinge, Ole

(57) **Abstract**

According to one embodiment, a lighting circuit includes a first power supply circuit (9), a first detecting circuit (11), a first control circuit (12), and a first protecting circuit (13). The first power supply circuit (9) is supplied with power from a first power supply (6) and outputs a direct current. The first detecting circuit (11) detects an electric current flowing between the first power supply circuit (9) and an output terminal. The first control circuit (12) compares a first detection value detected by the first detecting circuit (11) with a reference value and controls the first power supply circuit (9). The first protecting circuit (13) is connected to the first detecting circuit (11) and suppresses the first detection value detected if an electric current flows in a direction opposite to a first direction, which is a direction of the direct current output from the first power supply circuit (9), to be relatively smaller than the first detection value detected if an electric current flows in the first direction.

## Description

### FIELD

Embodiments described herein relate generally to a lighting circuit and a luminaire.

### BACKGROUND

In recent years, in a luminaire, an incandescent lamp and a fluorescent lamp used as an illumination light source are replaced with a light source that consumes less energy and has longer life such as a light-emitting diode (LED). For example, new illumination light sources such as an electro-luminescence (EL) and an organic light-emitting diode (OLED) are also developed. There is known a luminaire in which a capacitive element such as a capacitor is connected to these light-emitting elements to stably light the light-emitting elements without flickering. In such a luminaire, for example, when a lighting load is replaced or when a load is detached and attached, it is likely that an electric current flows backward from the capacitor to a power supply side and causes a malfunction of a power supply circuit.

### BRIEF DESCRIPTION OF THE DRAWINGS

FIG. 1 is a circuit diagram illustrating a luminaire including a lighting circuit according to a first embodiment; and
FIG. 2 is a circuit diagram illustrating a luminaire including a lighting circuit according to a second embodiment.

### DETAILED DESCRIPTION

In general, according to one embodiment, a lighting circuit includes a first power supply circuit, a first detecting circuit, a first control circuit, and a first protecting circuit. The first power supply circuit is supplied with electric power from a first power supply and outputs a direct current. The first detecting circuit detects an electric current flowing between the first power supply circuit and an output terminal. The first control circuit compares a first detection value detected by the first detecting circuit with a reference value and controls the first power supply circuit. The first protecting circuit is connected to the first detecting circuit and suppresses the first detection value detected if an electric current flows in a direction opposite to a first direction, which is a direction of the direct current output from the first power supply circuit, to be relatively smaller than the first detection value detected if an electric current flows in the first direction.

In general, according to another embodiment, a luminaire includes a lighting circuit described above and a light-emitting module. The light-emitting module is connected as a lighting load of the lighting circuit and includes a light-emitting element and a capacitive element.

Embodiments are explained in detail below with reference to the accompanying drawings. In this specification and the figures, components same as those explained concerning the figures already referred to are denoted by the same reference numerals and signs and detailed explanation of the components is omitted as appropriate.

### First Embodiment

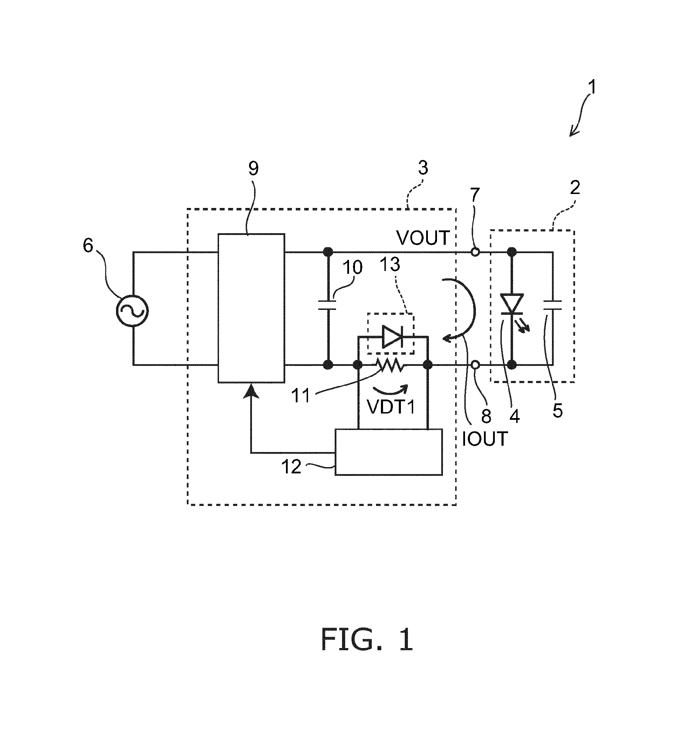

FIG. 1 is a circuit diagram illustrating a luminaire including a lighting circuit according to a first embodiment.

As shown in FIG. 1, a luminaire 1 includes a light-emitting module 2 and a lighting circuit 3 that lights the light-emitting module 2.

The light-emitting module 2 includes a light-emitting element 4 and a capacitive element 5 connected in parallel to the light-emitting element 4. The light-emitting module 2 is formed in, for example, a columnar shape, for example, a bulb shape and detachably connected to output terminals 7 and 8 of the lighting circuit 3. The light-emitting element 4 includes, for example, an LED. The light-emitting element 4 is supplied with electric power from the lighting circuit 3 and lit. The capacitive element 5 is, for example, a capacitor and provided near the light-emitting element 4. In other words, the capacitive element 5 is provided closer to the light-emitting element 4 than, for example, the lighting circuit 3. The capacitive element 5 reduces noise from the lighting circuit 3 and the like and suppresses fluctuation in a voltage to prevent flickering.

The lighting circuit 3 includes a first power supply circuit 9, a first capacitor 10, a first detecting circuit 11 that detects an electric current flowing between the first power supply circuit 9 and the output terminal 8, a first control circuit 12, and a first protecting circuit 13.

The lighting circuit 3 converts electric power supplied from a first power supply 6 and outputs direct-current power to the light-emitting module 2 via the output terminals 7 and 8. The first power supply 6 is an alternating-current power supply such as a commercial power supply or is a direct-current power supply such as a secondary battery.

The first power supply circuit 9 is supplied with electric power from the first power supply 6 and outputs a direct-current voltage VOUT and a direct current IOUT suitable for the light-emitting element 4. The first power supply circuit 9 includes a switching power supply such as a DC-DC converter.

The first capacitor 10 is connected in parallel to an output side of the first power supply circuit 9, smoothes an output voltage of the first power supply circuit 9, and removes noise.

The first detecting circuit 11 detects an electric current flowing between the first power supply circuit 9 and the output terminal 8 and outputs, as a detection value, a voltage proportional to a current value. In the lighting circuit 3, the first detecting circuit 11 includes a resistor. A first detection value VDT1 is a voltage at both ends of the resistor. The polarity of the first detection value VDT1 is positive polarity if the first detecting circuit 11 detects an electric current in a first direction, which is a direction in which the direct current IOUT output from the first power supply circuit 9 flows. Therefore, if an electric current in a direction opposite to the first direction flows to the first detecting circuit 11, the first detection value VDT1 has negative polarity.

The first control circuit 12 compares the first detection value VDT1 detected by the first detecting circuit 11 with a reference value and controls the first power supply circuit 9. For example, if the first detection value VDT1 detected by the first detecting circuit 11 is smaller than the reference value, the first control circuit 12 controls the first power supply circuit 9 to increase the direct current IOUT to be output. If the first detection value VDT1 detected by the first detecting circuit 11 is larger than the reference value, the first control circuit 12 controls the first power supply circuit 9 to reduce the direct current IOUT to be output. As a result, the direct current IOUT output from the first power supply circuit 9 is controlled to a predetermined value based on the reference value. The predetermined value is, for example, a current value with which a predetermined optical output can be obtained from the light-emitting module 2.

The first protecting circuit 13 is connected to the first detecting circuit 11. The first protecting circuit 13 suppresses the first detection value VDT1 detected if an electric current flows in a direction opposite to a first direction, which is a direction of the direct current IOUT output from the first power supply circuit 9, to be relatively smaller than the first detection value VDT1 detected if an electric current flows in the first direction. In this specific example, the first protecting circuit 13 includes a Schottky barrier diode connected in parallel to the first detecting circuit 11 with the direction opposite to the first direction set as a forward direction. Therefore, since the Schottky barrier diode is reversely biased with respect to the electric current in the first direction, the Schottky barrier diode does not affect the first detection value VDT1 having positive polarity in the first detecting circuit 11. Since the Schottky barrier diode is forward-biased with respect to the electric current in the direction opposite to the first direction, the Schottky barrier diode suppresses the first detection value VDT1 having negative polarity in the first detecting circuit 11 to a forward direction voltage.

If electric power is supplied from the first power supply 6 and the first power supply circuit 9 lights the light-emitting module 2, the capacitive element 5 is charged to a forward direction voltage of the light-emitting element 4. Therefore, for example, if the light-emitting module 2 is removed from the luminaire 1 and, thereafter, the same light-emitting module 2 is attached to the luminaire 1, a high voltage is applied from the light-emitting module 2 side to the first power supply circuit 9.

At this point, for example, if the first protecting circuit 13 is absent, an electric current flows from the capacitive element 5 in the direction of the first power supply circuit 9, i.e., through a path of the capacitive element 5, the output terminal 7, the first power supply circuit 9, the first detecting circuit 11, the output terminal 8, and the capacitive element 5 in the direction opposite to the first direction. As a result, the first detecting circuit 11 outputs the first detection value VDT1 having negative polarity. Therefore, it is likely that the first control circuit 12 malfunctions and is broken.

On the other hand, in this embodiment, the first protecting circuit 13 suppresses the first detection value VDT1 detected if an electric current in the direction of the first power supply circuit 9, i.e., an electric current in the direction opposite to the first direction flows from the capacitive element 5 to be relatively small. As a result, an absolute value of the first detection value VDT1 having negative polarity input to the first control circuit 12 is suppressed to a relatively small value. Therefore, the first control circuit 12 neither malfunctions nor is broken.

The first protecting circuit 13 only has to be capable of protecting the first control circuit 12 from the input of a voltage having negative polarity and a large absolute value by suppressing the first detection value VDT1 detected if an electric current flows in the direction opposite to the first direction to be relatively smaller than the first detection value VDT1 detected if an electric current flows in the first direction.

The first protecting circuit 13 may be, for example, a bypass circuit that is connected in parallel to the first detecting circuit 11 and to which an electric current flows in the direction opposite to the first direction. For example, if the electric current in the direction opposite to the first direction flows between the first power supply circuit 9 and the output terminal 8, a part of the electric current flows to the first protecting circuit 13 functioning as the bypass circuit. Therefore, a current value flowing to the first detecting circuit 11 decreases. The absolute value of the detection value VDT1 of the first detecting circuit 11 can be reduced. As a result, the first control circuit 12 neither malfunctions nor is broken or burned.

The first protecting circuit 13 may be a clamp circuit that keeps the first detection value VDT1 at a value equal to or larger than a specified value. For example, if an electric current in the direction opposite to the first direction flows between the first power supply circuit 9 and the output terminal 8, the first protecting circuit 13 functioning as the clamp circuit can keep an absolute value of the detection value VDT1 of the first detecting circuit 11 at a relatively small value. As a result, the first control circuit 12 neither malfunctions nor is broken or burned.

### Second Embodiment

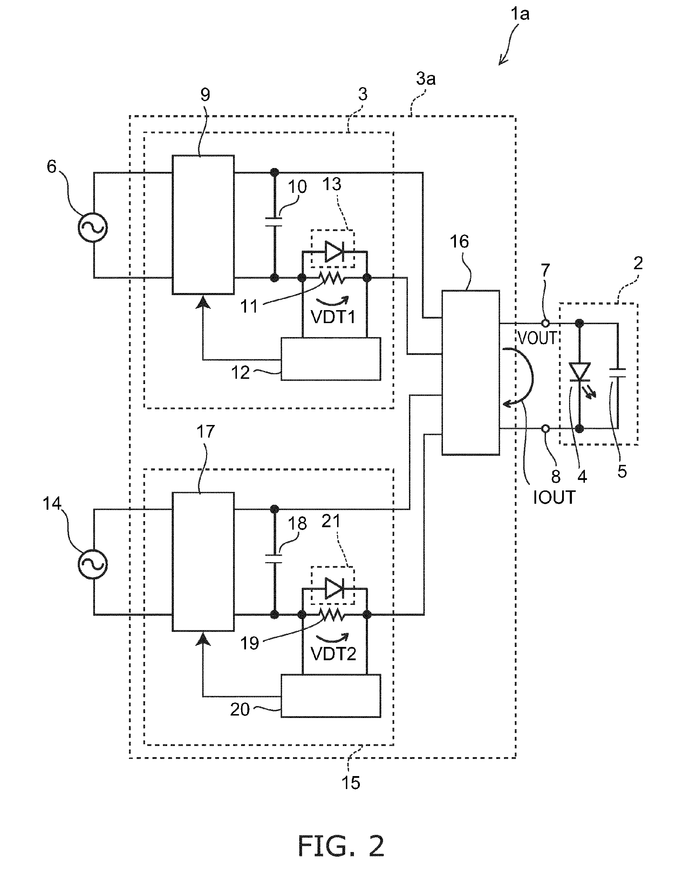

FIG. 2 is a circuit diagram illustrating a luminaire including a lighting circuit according to a second embodiment.

A luminaire 1a according to the second embodiment is different from the luminaire 1 according to the first embodiment in the configuration of the lighting circuit 3. Specifically, the luminaire 1a includes a lighting circuit 3a, which is formed by adding a second lighting circuit 15 and a selecting circuit 16 to the lighting circuit 3, and the light-emitting module 2.

The lighting circuit 3 is configured the same as the lighting circuit 3 in the luminaire 1 except that the lighting circuit 3 is connected to the output terminals 7 and 8 via the selecting circuit 16 as a first lighting circuit. The lighting circuit (the first lighting circuit) 3 changes electric power supplied from the first power supply 6 and outputs the direct current IOUT to the light-emitting module 2 via the selecting circuit 16 and the output terminals 7 and 8.

The second lighting circuit 15 is connected to the output terminals 7 and 8 via the selecting circuit 16. The second lighting circuit 15 includes a second power supply circuit 17, a second capacitor 18, and a second detecting circuit 19 that detects an electric current flowing between the second power supply circuit 17 and the output terminal 8 connected via the selecting circuit 16, a second control circuit 20, and a second protecting circuit 21.

The second lighting circuit 15 converts electric power supplied from the second power supply 14 and outputs direct-current power to the light-emitting module 2 via the selecting circuit 16 and the output terminals 7 and 8. The second power supply 14 is an alternating-current power supply such as a commercial power supply or a direct-current power supply such as a secondary battery. The first power supply 6 and the second power supply 14 are power supplies of separate systems. For example, one power supply can be used as a power supply for normal operation and the other power supply can be used as a backup power supply for emergency.

In the second lighting circuit 15, the first power supply 9, the first capacitor 10, the output terminal 8, the first detecting circuit 11, the first control circuit 12, and the first protecting circuit 13 in the lighting circuit 3 are respectively replaced with the second power supply circuit 17, the second capacitor 18, the output terminal 8 connected via the selecting circuit 16, the second detecting circuit 19, the second control circuit 20, and the second protecting circuit 21.

The second power supply circuit 17 is supplied with electric power from the second power supply 14 and outputs the direct-current voltage VOUT and the direct current IOUT suitable for the light-emitting element 4. The second power supply circuit 17 includes a switching power supply such as a DC-DC converter.

The second capacitor 18 is connected in parallel to the output side of the second power supply circuit 17, smoothes an output voltage of the second power supply circuit 17, and removes noise.

The second detecting circuit 19 detects an electric current flowing between the second power supply circuit 17 and the output terminal 8 connected via the selecting circuit 16 and outputs a voltage proportional to a current value as a detection value. In the second lighting circuit 15, the second detecting circuit 19 includes a resistor. A second detection value VDT2 is a voltage at both ends of the resistor. The polarity of the second detection value VDT2 is positive polarity if the second detecting circuit 19 detects an electric current in a second direction, which is a direction in which the direct current IOUT output from the second power supply circuit 17 flows. Therefore, if an electric current in a direction opposite to the second direction flows to the second detecting circuit 19, the second detection value VDT2 has negative polarity.

The second control circuit 20 compares the second detection value VDT2 detected by the second detecting circuit 19 with a reference value and controls the second power supply circuit 17. For example, if the second detection value VDT2 detected by the second detecting circuit 19 is smaller than the reference value, the second control circuit 20 controls the second power supply circuit 17 to increase the direct current IOUT to be output. If the second detection value VDT2 detected by the second detecting circuit 19 is larger than the reference value, the second control circuit 20 controls the second power supply circuit 17 to reduce the direct current IOUT to be output. As a result, the direct current IOUT output from the second power supply circuit 17 is controlled to a predetermined value based on the reference value. The predetermined value is, for example, a current value with which a predetermined optical output can be obtained from the light-emitting module 2.

The second protecting circuit 21 is connected to the second detecting circuit 19. The second protecting circuit 21 suppresses the second detection value VDT2 detected if an electric current flows in a direction opposite to a second direction, which is a direction of the direct current IOUT output from the second power supply circuit 17, to be relatively smaller than the second detection value VDT2 detected if an electric current flows in the second direction. In this specific example, the second protecting circuit 21 includes a Schottky barrier diode connected in parallel to the second detecting circuit 19 with the direction opposite to the second direction set as a forward direction. Therefore, since the Schottky barrier diode is reversely biased with respect to the electric current in the second direction, the Schottky barrier diode does not affect the second detection value VDT2 having positive polarity in the second detecting circuit 19. Since the Schottky barrier diode is forward-biased with respect to the electric current in the direction opposite to the second direction, the Schottky barrier diode suppresses the second detection value VDT2 having negative polarity in the second detecting circuit 19 to a forward direction voltage.

If electric power is supplied from the second power supply 14 and the second power supply circuit 17 lights the light-emitting module 2, the capacitive element 5 is charged to a forward direction voltage of the light-emitting element 4. Therefore, for example, if the light-emitting module 2 is removed from the luminaire 1a and, thereafter, the same light-emitting module 2 is attached to the luminaire 1a, a high voltage is applied from the light-emitting module 2 side to the second power supply circuit 17.

At this point, for example, if the second protecting circuit 21 is absent, an electric current flows from the capacitive element 5 in the direction of the second power supply circuit 17, i.e., through a path of the capacitive element 5, the output terminal 7, the selecting circuit 16, the second power supply circuit 17, the second detecting circuit 19, the selecting circuit 16, the output terminal 8, and the capacitive element 5 in the direction opposite to the second direction. As a result, the second detecting circuit 19 outputs the second detection value VDT2 having negative polarity. Therefore, it is likely that the second control circuit 20 malfunctions and is broken.

On the other hand, in this embodiment, the second protecting circuit 21 suppresses the second detection value VDT2 detected if an electric current in the direction of the second power supply circuit 17, i.e., an electric current in the direction opposite to the second direction flows from the capacitive element 5 to be relatively small. As a result, an absolute value of the second detection value VDT2 having negative polarity input to the second control circuit 20 is suppressed to a relatively small value. Therefore, the second control circuit 20 neither malfunctions nor is broken.

The second protecting circuit 21 only has to be capable of protecting the second control circuit 20 from the input of a voltage having negative polarity and a large absolute value by suppressing the second detection value VDT2 detected if an electric current flows in the direction opposite to the second direction to be relatively smaller than the second detection value VDT2 detected if an electric current flows in the second direction.

The second protecting circuit 21 may be, for example, a bypass circuit that is connected in parallel to the second detecting circuit 19 and to which an electric current flows in the direction opposite to the second direction. For example, if the electric current in the direction opposite to the second direction flows between the second power supply circuit 17 and the output terminal 8 connected via the selecting circuit 16, a part of the electric current flows to the second protecting circuit 21 functioning as the bypass circuit. Therefore, a current value flowing to the second detecting circuit 19 decreases. The absolute value of the detection value VDT2 of the second detecting circuit 19 can be reduced. As a result, the second control circuit 20 neither malfunctions nor is broken or burned.

The second protecting circuit 21 may be a clamp circuit that keeps the second detection value VDT2 at a value equal to or larger than a specified value. For example, if an electric current in the direction opposite to the second direction flows between the second power supply circuit 17 and the output terminal 8 connected via the selecting circuit 16, the second protecting circuit 21 functioning as the clamp circuit can keep an absolute value of the detection value VDT2 of the second detecting circuit 19 at a relatively small value. As a result, the second control circuit 20 neither malfunctions nor is broken or burned.

The selecting circuit 16 selects one of the first power supply circuit 9 and the second power supply circuit 17 and lights the light-emitting element 4 via the output terminals 7 and 8. The selecting circuit 16 is, for example, a relay. If an output of the first power supply circuit 9 is equal to or larger than a specified value, the selecting circuit 16 selects the first power supply circuit 9 and electrically connects the first power supply circuit 9 to the light-emitting module 2 via the output terminals 7 and 8. If the output of the first power supply circuit 9 falls below the specified value, the selecting circuit 16 selects the second power supply circuit 17 and electrically connects the second power supply circuit 17 to the light-emitting module 2 via the output terminals 7 and 8. The specified value is a voltage, an electric current, or electric power necessary for lighting the light-emitting element 4. For example, if the output of the first power supply circuit 9 falls below the specified value because of abnormality of at least one of the first power supply 6 and the first power supply circuit 9, the selecting circuit 16 selects an output of the second power supply circuit 17 and lights the light-emitting element 4.

In this embodiment, as a power supply to the light-emitting module 2, the first power supply 6 and the second power supply 14 of the separate systems can be switched. Therefore, for example, if the luminaire 1a is used as an emergency lamp, normal lighting and emergency lighting can be performed by one light-emitting module 2.

In this embodiment, in addition to the effects of the first embodiment, as explained below, even if the selecting circuit 16 switches the selection of the first power supply circuit 9 and the second power supply circuit 17, the first control circuit 12 and the second control circuit 20 neither malfunction nor are broken.

In this embodiment, the first power supply circuit 9 or the second power supply circuit 17 selected by the selecting circuit 16 lights the light-emitting module 2 via the first detecting circuit 11 and the second detecting circuit 19 to which the first protecting circuit 13 and the second protecting circuit 21 are respectively connected. As a result, even if an electric current flows from the capacitive element 5 in the first direction, which is the direction of the first power supply circuit 9, or flows from the capacitive element 5 in the second direction, which is the direction of the second power supply circuit 17, the first control circuit 12 and the second control circuit 20 are protected. For example, if the selecting circuit 16 switches the selection from the second power supply circuit 17 to the first power supply circuit 9 or if the selecting circuit 16 switches the selection from the first power supply circuit 9 to the second power supply circuit 17, the first and second detection values VDT1 and VDT2 by the electric current from the capacitive element 5 in the first direction, which is the direction of the first power supply circuit 9, and the electric current from the capacitive element 5 in the second direction, which is the direction of the second power supply circuit 17, are suppressed. As a result, the first control circuit 12 and the second control circuit 20 neither malfunction nor are broken.

The embodiments are explained above with reference to the specific examples. However, the present disclosure is not limited to the embodiments. Various modifications are possible.

For example, the light-emitting element 4 is not limited to the LED and may be an OLED or the like. Plural light-emitting elements 4 may be connected to the light-emitting module 2 in series or in parallel according to a desired optical output. If the plural light-emitting elements 4 are used, the capacitive element 5 can be connected in parallel to the respective light-emitting elements 4. Further, the capacitive element 5 may be connected to both ends of the plural light-emitting elements 4 connected in series.

While certain embodiments have been described, these embodiments have been presented by way of example only, and are not intended to limit the scope of the present disclosure. Indeed, the novel embodiments described herein may be embodied in a variety of other forms; furthermore, various omissions, substitutions, and changes in the form of the embodiments described herein may be made without departing from the spirit of the present disclosure. The accompanying claims and their equivalents are intended to cover such forms or modifications as would fall within the scope and spirit of the present disclosure.

## Claims

1. A lighting circuit comprising:
a first power supply circuit (9) configured to be supplied with electric power from a first power supply (6) and output a direct current;
a first detecting circuit (11) configured to detect an electric current flowing between the first power supply circuit (9) and an output terminal;
a first control circuit (12) configured to compare a first detection value detected by the first detecting circuit (11) with a reference value and control the first power supply circuit (9); and
a first protecting circuit (13) connected to the first detecting circuit (11) and configured to suppress the first detection value detected if an electric current flows in a direction opposite to a first direction, which is a direction of the direct current output from the first power supply circuit (9), to be relatively smaller than the first detection value detected if an electric current flows in the first direction.

2. The circuit according to claim 1, further comprising a first capacitor (10) connected between outputs of the first power supply circuit (9).

3. The circuit according to claim 1 or 2, wherein the first protecting circuit (13) is a bypass circuit connected in parallel to the first detecting circuit (11), the electric current in the direction opposite to the first direction flowing through the bypass circuit.

4. The circuit according to claim 1 or 2, wherein the first protecting circuit (13) is a clamp circuit configured to keep the first detection value at a value equal to or larger than a specified value.

5. The circuit according to claim 1 or 2, wherein the first protecting circuit (13) is a Schottky barrier diode connected in parallel to the first detecting circuit (11).

6. The circuit according to any one of claims 1 to 5, further comprising:
a second power supply circuit (17) configured to be supplied with electric power from a second power supply (14) and output the direct current;
a second detecting circuit (19) configured to detect an electric current flowing between the second power supply circuit (17) and the output terminal;
a second control circuit (20) configured to compare a second detection value detected by the second detecting circuit (19) with a reference value and control the second power supply circuit;
a second protecting circuit (21) connected to the second detecting circuit (19) and configured to suppress the second detection value detected if an electric current flows in a direction opposite to a second direction, which is a direction of the direct current output from the second power supply circuit (17), to be relatively smaller than the second detection value detected if an electric current flows in the second direction; and
a selecting circuit (16) configured to select one of the first power supply circuit (9) and the second power supply circuit (17) and output the direct current to the output terminal.

7. The circuit according to claim 6, wherein the selecting circuit (16) selects the first power supply circuit (9) if the output of the first power supply circuit (9) is equal to or larger than a specified value and selects the second power supply circuit (17) if the output of the first power supply circuit (9) falls below the specified value.

8. A luminaire comprising:
a lighting circuit (3, 3a) according to any one of claims 1 to 7; and
a light-emitting module (2) connected as a lighting load of the lighting circuit and including a light-emitting element (4) and a capacitive element (5).
